# EUROPEAN PATENT SPECIFICATION

(11) **EP 3 337 046 B1**
(45) Date of publication and mention of the grant of the patent: **19.05.2021**
(21) Application number: 15903797.7
(22) Date of filing: 14.09.2015
(51) Int. Cl.: H04B 1/74, H04B 10/25, H04Q 11/00

(54) **COMMUNICATION METHOD AND DEVICE BASED ON OPTICAL NETWORK SYSTEM**
KOMMUNIKATIONSVERFAHREN UND VORRICHTUNG AUF DER BASIS EINES OPTISCHEN NETZWERKSYSTEMS
PROCÉDÉ ET DISPOSITIF DE COMMUNICATION FONDÉS SUR UN SYSTÈME DE RÉSEAU OPTIQUE

(43) Date of publication of application: 20.06.2018
(73) Proprietor: Huawei Technologies Co., Ltd., Longgang Shenzhen, Guangdong 518129 (CN)
(72) Inventor: LIU, Xiaobin, Shenzhen Guangdong 518129 (CN); HU, Haitao, Shenzhen Guangdong 518129 (CN)
(74) Representative: Goddar, Heinz J.
(86) International application number: PCT/CN2015/089548
(87) International publication number: WO 2017/045106

(56) References cited:
- EP-A1- 2 744 155
- CN-A- 102 480 323
- CN-A- 103 731 282
- US-A1- 2005 025 165
- US-A1- 2005 074 238
- DAVID K HUNTER ET AL: "Protection of long-reach PON traffic", ACCESS NETWORKS, ACM, 2 PENN PLAZA, SUITE 701 NEW YORK NY 10121-0701 USA, 4 September 2006 (2006-09-04), pages 16-es, XP058156974, DOI: 10.1145/1189355.1189371 ISBN: 978-1-59593-513-7

## Description

### TECHNICAL FIELD

Embodiments of the present invention relate to the communications field, and more specifically, to a communication method and a device based on an optical network system.

### BACKGROUND

The Dynamic Host Configuration Protocol (Dynamic Host Configuration Protocol, "DHCP" for short) is a protocol in a TCP/IP protocol stack, and is mainly used for allocating dynamic IP addresses to network terminals. These allocated IP addresses are an address set including one or more IP addresses reserved by a DHCP server in advance, and these IP addresses are usually a segment of consecutive addresses. When a DHCP terminal leases an IP address from the DHCP server, the DHCP server provides an available IP address and a subnet mask for the DHCP terminal according to a currently configured IP address, and further provides a related lease time.

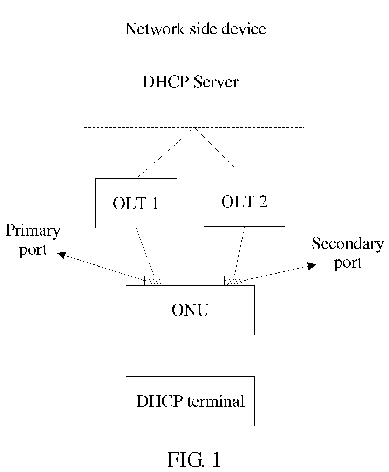

In the prior art, a protection group based on an optical network system is usually used to implement reliable communication between a DHCP server and a DHCP terminal. FIG. 1 shows a scenario of implementing communication between a DHCP server and a DHCP terminal by using a protection group based on an optical network system. As shown in FIG. 1, the protection group includes an optical network unit (Optical Network Unit, "ONU" for short) on a DHCP terminal side and an optical line terminal (Optical Line Terminal, "OLT" for short) (two OLTs are shown in FIG. 1) on a network side. A primary port of the ONU is connected to an OLT 1, and a secondary port of the ONU is connected to an OLT 2. As shown in FIG. 1, the OLT 1 and the OLT 2 are converged to a same network side device (corresponding to a DHCP server). Normally, a service is transmitted on a path (that is, a primary path) on which the OLT 1 is located. For example, when the DHCP terminal leases an IP address from the DHCP server, the DHCP terminal generates a DHCP request and sends the DHCP request to the ONU (this process is also referred to as a process in which the DHCP terminal dials to lease the IP address), the ONU sends the DHCP request to the OLT 1 by using the primary port, and the OLT 1 forwards the DHCP request to the DHCP server. A DHCP Ack that is delivered by the DHCP server and that includes the IP address is sent to the ONU by using the OLT 1, and then is forwarded by the ONU to the DHCP terminal. The DHCP terminal can access a network based on the IP address allocated by the server. A DHCP snooping binding table and an IP/MAC binding table are configured on the OLT 1, and these tables can ensure service communication between the DHCP terminal and the network side. The DHCP snooping binding table and the IP/MAC binding table are generated by the OLT 1 by snooping the DHCP request and the DHCP Ack. When a line on which the OLT 1 is located is faulty, the protection group is switched, that is, a working port of the ONU is switched from the primary port to the secondary port, that is, after switching, service transmission between the DHCP terminal and the network side is implemented by using a path (that is, a secondary path) on which the OLT 2 is located. However, because an IP address lease time of the DHCP terminal is usually relatively long, and the DHCP terminal cannot sense a switching action of the protection group, the DHCP terminal generally does not redial immediately to renew the lease of the IP address. Therefore, the DHCP snooping binding table and the IP/MAC binding table that are configured by the OLT 1 are not on the OLT 2, and a service cannot be transmitted between the DHCP terminal and the network side. In the prior art, after the switching, a corresponding DHCP snooping binding table and a corresponding IP/MAC binding table are not generated on the OLT 2 until the DHCP terminal redials, and then service transmission between the DHCP terminal and the network side can return to normal.

EP 2 744 155 A1 discloses a data communication method in an optical network system, in which an ONU is connected to a first OLT by means of a first port and to a second OLT by means of a second port. The method comprises receiving, through the first port, a first message sent by the first OLT instructing the ONU to switch to the second port from the first port, and correspondingly switching, by the first ONU, to the second port and performing data communication with the second OLT through the second port. However, this document does not contemplate the application of such a method to the communication between a DHCP terminal and a DHCP server.

US 2005/0025165 A1 describes a method for assigning IP addresses in an effort led passive optical network that includes one OLT and a plurality of ONTs connected to the OLT.

It can be learned that in the prior art, an end-to-end service switching time is relatively long, and quality of service transmission between the DHCP terminal and the network side decreases, or even service transmission is interrupted.

### SUMMARY

Embodiments of the present invention provide a communication method and a device based on an optical network system, so that an end-to-end service switching time can be effectively shortened.

A first aspect provides a communication method for an optical network system, where the optical network system includes a protection group, the protection group includes a first device on a Dynamic Host Configuration Protocol DHCP terminal side and a second device and a third device that are on a DHCP server side, a primary port of the first device is connected to the second device, and a secondary port of the first device is connected to the third device; and the method includes:
obtaining, by the first device, identification information of a DHCP terminal when detecting that a working port of the first device is switched from the primary port to the secondary port, where the identification information includes a Media Access Control MAC address of the DHCP terminal;
generating, by the first device according to the identification information, a DHCP request message used for requesting an IP address for the DHCP terminal, where the DHCP request message includes the identification information;
sending, by the first device, the DHCP request message to the third device by using the secondary port, so that the third device forwards the DHCP request message to a DHCP server;
receiving, by the first device, a DHCP response message sent by the third device, where the DHCP response message is received by the third device from the DHCP server, and the DHCP response message includes an IP address allocated by the DHCP server to the DHCP terminal; and
sending, by the first device to the DHCP terminal, the IP address allocated by the DHCP server to the DHCP terminal, so that the DHCP terminal transmits a service to the DHCP server by using a secondary path on which the third device is located.

With reference to the first aspect, in a possible implementation of the first aspect, the first device is an optical network unit ONU or an optical network terminal ONT, and both the second device and the third device are optical line terminals OLTs.

With reference to the first aspect and the foregoing implementation, in a possible implementation of the first aspect, the identification information of the DHCP terminal further includes virtual local area network VLAN information of the DHCP terminal.

With reference to the first aspect and the foregoing implementations, in a possible implementation of the first aspect, the DHCP request message is a DHCP request, and the DHCP response message is a DHCP Ack.

A second aspect provides a communication method for an optical network system, where the optical network system includes a protection group, the protection group includes a first device on a Dynamic Host Configuration Protocol DHCP terminal side and a second device and a third device that are on a DHCP server side, a primary port of the first device is connected to the second device, and a secondary port of the first device is connected to the third device; and the method includes:
receiving, by the third device, a DHCP request message that is sent by the first device and that is used for requesting an IP address for the DHCP terminal, where the DHCP request message is generated by the first device according to identification information of the DHCP terminal after the protection group is switched, the DHCP request message includes the identification information, and the identification information includes a Media Access Control MAC address of the DHCP terminal;
forwarding, by the third device, the DHCP request message to a DHCP server, and configuring binding information based on the identification information;
receiving, by the third device, a DHCP response message that is sent by the DHCP server and that includes an IP address allocated to the DHCP terminal; and
forwarding, by the third device, the DHCP response message to the first device, and completing the binding information based on the IP address allocated to the DHCP terminal.

With reference to the second aspect, in a possible implementation of the second aspect, the first device is an optical network unit ONU or an optical network terminal ONT, and both the second device and the third device are optical line terminals OLTs.

With reference to the second aspect and the foregoing implementation, in a possible implementation of the second aspect, the identification information of the DHCP terminal further includes virtual local area network VLAN information of the DHCP terminal.

With reference to the second aspect and the foregoing implementations, in a possible implementation of the second aspect, the binding information configured by the third device includes a DHCP snooping binding table, a MAC binding table, and an IP binding table.

With reference to the second aspect and the foregoing implementations, in a possible implementation of the second aspect, the DHCP request message is a DHCP request, and the DHCP response message is a DHCP Ack.

A third aspect provides a device for an optical network system, where the optical network system includes a protection group, the protection group includes the device on a Dynamic Host Configuration Protocol DHCP terminal side and a second device and a third device that are on a DHCP server side, a primary port of the device is connected to the second device, and a secondary port of the device is connected to the third device; and the device includes:
an obtaining module, configured to obtain identification information of the DHCP terminal when detecting that a working port of the first device is switched from the primary port to the secondary port, where the identification information includes a Media Access Control MAC address of the DHCP terminal;
a generation module, configured to generate, according to the identification information obtained by the obtaining module, a DHCP request message used for requesting an IP address for the DHCP terminal, where the DHCP request message includes the identification information;
a first sending module, configured to send, to the third device by using the secondary port, the DHCP request message generated by the generation module, so that the third device forwards the DHCP request message to a DHCP server;
a receiving module, configured to receive a DHCP response message sent by the third device, where the DHCP response message is received by the third device from the DHCP server, and the DHCP response message includes an IP address allocated by the DHCP server to the DHCP terminal; and
a second sending module, configured to send, to the DHCP terminal, the IP address that is received by the receiving module and that is allocated by the DHCP server to the DHCP terminal, so that the DHCP terminal transmits a service to the DHCP server by using a secondary path on which the third device is located.

With reference to the third aspect, in a possible implementation of the third aspect, the device is an optical network unit ONU or an optical network terminal ONT, and both the second device and the third device are optical line terminals OLTs.

With reference to the third aspect and the foregoing implementation, in a possible implementation of the third aspect, the identification information of the DHCP terminal further includes virtual local area network VLAN information of the DHCP terminal.

With reference to the third aspect and the foregoing implementations, in a possible implementation of the third aspect, the DHCP request message is a DHCP request, and the DHCP response message is a DHCP Ack.

A fourth aspect provides a device for an optical network system, where the optical network system includes a protection group, the protection group includes a first device on a Dynamic Host Configuration Protocol DHCP terminal side and a second device and the device that are on a DHCP server side, a primary port of the first device is connected to the second device, and a secondary port of the first device is connected to the device; and the device includes:
a first receiving module, configured to receive a DHCP request message that is sent by the first device and that is used for requesting an IP address for the DHCP terminal, where the DHCP request message is generated by the first device according to identification information of the DHCP terminal after the protection group is switched, the DHCP request message includes the identification information, and the identification information includes a Media Access Control MAC address of the DHCP terminal;
a first sending module, configured to: forward the DHCP request message received by the first receiving module to a DHCP server, and configure binding information based on the identification information;
a second receiving module, configured to receive a DHCP response message that is sent by the DHCP server and that includes an IP address allocated to the DHCP terminal; and
a second sending module, configured to: forward the DHCP response message received by the second receiving module to the first device, and complete the binding information based on the IP address allocated to the DHCP terminal.

With reference to the fourth aspect, in a possible implementation of the fourth aspect, the first device is an optical network unit ONU or an optical network terminal ONT, and both the second device and the device are optical line terminals OLTs.

With reference to the fourth aspect and the foregoing implementation, in a possible implementation of the fourth aspect, the identification information of the DHCP terminal further includes virtual local area network VLAN information of the DHCP terminal.

With reference to the fourth aspect and the foregoing implementations, in a possible implementation of the fourth aspect, the binding information configured by the device includes a DHCP snooping binding table, a MAC binding table, and an IP binding table.

With reference to the fourth aspect and the foregoing implementations, in a possible implementation of the fourth aspect, the DHCP request message is a DHCP request, and the DHCP response message is a DHCP Ack.

Based on the foregoing technical solutions, in the embodiments of the present invention, the first device on the DHCP terminal side generates the DHCP request message according to the identification information of the DHCP terminal after detecting that the protection group is switched, and sends the DHCP request message to the DHCP server by using a working path used after the switching, and correspondingly, receives, by using the working path used after the switching, the DHCP response message that is delivered by the DHCP server and that includes the allocated IP address. In this process, the third device on the working path used after the switching generates the corresponding DHCP snooping binding table and the corresponding MAC/IP binding table by snooping the DHCP request message and the DHCP response message, so that an end-to-end service can still be normally implemented after protection switching is performed. In the prior art, after protection switching, the DHCP terminal needs to initiate the DHCP request message. By contrast, in the embodiments of the present invention, quick protection switching of the end-to-end service can be implemented, and therefore reliability of service transmission between a user terminal and a network side can be improved.

### BRIEF DESCRIPTION OF DRAWINGS

To describe the technical solutions in the embodiments of the present invention more clearly, the following briefly describes the accompanying drawings required for describing the embodiments or the prior art. Apparently, the accompanying drawings in the following description show merely some embodiments of the present invention, and a person of ordinary skill in the art may still derive other drawings from these accompanying drawings without creative efforts.
FIG. 1 is a schematic diagram of an application scenario according to an embodiment of the present invention;
FIG. 2 is a flowchart of a communication method based on an optical network system according to an embodiment of the present invention;
FIG. 3 is another schematic diagram of an application scenario according to an embodiment of the present invention;
FIG. 4 is another flowchart of a communication method based on an optical network system according to an embodiment of the present invention;
FIG. 5 is a schematic block diagram of a device based on an optical network system according to an embodiment of the present invention;
FIG. 6 is another schematic block diagram of a device based on an optical network system according to an embodiment of the present invention;
FIG. 7 is still another schematic block diagram of a device based on an optical network system according to an embodiment of the present invention; and
FIG. 8 is yet another schematic block diagram of a device based on an optical network system according to an embodiment of the present invention.

### DESCRIPTION OF EMBODIMENTS

The following clearly and completely describes the technical solutions in the embodiments of the present invention with reference to the accompanying drawings in the embodiments of the present invention. Apparently, the described embodiments are some but not all of the embodiments of the present invention. All other embodiments obtained by a person of ordinary skill in the art based on the embodiments of the present invention without creative efforts shall fall within the protection scope of the present invention.

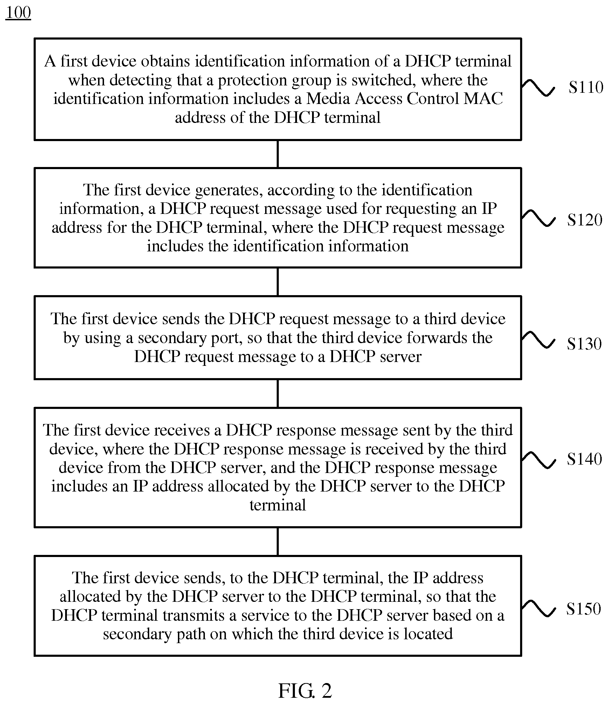

FIG. 2 shows a communication method 100 based on an optical network system. The optical network system includes a protection group, the protection group includes a first device on a Dynamic Host Configuration Protocol DHCP terminal side and a second device and a third device that are on a DHCP server side, a primary port of the first device is connected to the second device, and a secondary port of the first device is connected to the third device. The method 100 includes the following steps.

S110. The first device obtains identification information of a DHCP terminal when detecting that the protection group is switched, where the identification information includes a Media Access Control MAC address of the DHCP terminal.

It should be understood that, that the protection group is switched means that a working port of the first device is switched from the primary port to the secondary port. That is, when detecting that the primary port is switched to the secondary port, the first device determines that the protection group is switched.

Optionally, in this embodiment of the present invention, the identification information of the DHCP terminal further includes virtual local area network VLAN information of the DHCP terminal.

S120. The first device generates, according to the identification information, a DHCP request message used for requesting an IP address for the DHCP terminal, where the DHCP request message includes the identification information.

It should be understood that the DHCP request message includes the MAC address of the DHCP terminal. This step may be understood as that the first device simulates a process in which the DHCP request messages an IP address from a server.

S130. The first device sends the DHCP request message to the third device by using the secondary port, so that the third device forwards the DHCP request message to a DHCP server.

It should be understood that, before protection switching, a working path is a primary path, that is, a path on which the primary port and the second device are located. After protection switching, the working path is switched to a secondary path, that is, a path on which the secondary port and the third device are located. In S130, the first device sends the DHCP request message to the server by using the secondary path.

It should be further understood that the third device forwards the DHCP request message to the DHCP server after receiving the DHCP request message, and creates a DHCP snooping binding table based on the identification information that is of the DHCP terminal and that is carried in the DHCP request message. For example, the newly created DHCP snooping binding table includes information such as the MAC address of the DHCP terminal and port information (indicating the secondary port).

S140. The first device receives a DHCP response message sent by the third device, where the DHCP response message is received by the third device from the DHCP server, and the DHCP response message includes an IP address allocated by the DHCP server to the DHCP terminal.

It should be understood that the DHCP server allocates the IP address to the DHCP terminal according to the DHCP request message, and delivers the DHCP response message that includes the allocated IP address. It should be understood that the DHCP response message may further include information such as an IP address lease time. After receiving the DHCP response message, the third device forwards the DHCP response message to the first device, completes the DHCP snooping binding table based on the DHCP response message, and generates a MAC binding table and an IP binding table. The completed DHCP snooping binding table further includes the IP address allocated to the DHCP terminal, and may further include IP address lease time information. The IP binding table includes the IP address allocated to the DHCP terminal. The MAC binding table includes the MAC address of the DHCP terminal.

Optionally, in this embodiment of the present invention, the DHCP request message is a DHCP request, and the DHCP response message is a DHCP Ack.

S150. The first device sends, to the DHCP terminal, the IP address allocated by the DHCP server to the DHCP terminal, so that the DHCP terminal transmits a service to the DHCP server based on a secondary path on which the third device is located.

It should be understood that after steps S130 and S140, the DHCP snooping binding table and the MAC/IP binding table that are corresponding to the DHCP terminal are configured on the third device, so that normal service transmission between the DHCP terminal and a network side can be ensured. In addition, the DHCP snooping binding table and the MAC/IP binding table that are configured on the third device are consistent with a DHCP snooping binding table and a MAC/IP binding table that are configured on the second device before the protection group is switched, so that a user can sense no difference during network surfing, and user experience satisfaction can be improved.

Therefore, in this embodiment of the present invention, the first device on the DHCP terminal side generates the DHCP request message according to the identification information of the DHCP terminal after detecting that the protection group is switched, and sends the DHCP request message to the DHCP server by using a working path used after the switching, and correspondingly, receives, by using the working path used after the switching, the DHCP response message that is delivered by the DHCP server and that includes the allocated IP address. In this process, the third device on the working path used after the switching generates the corresponding DHCP snooping binding table and the corresponding MAC/IP binding table by snooping the DHCP request message and the DHCP response message, so that an end-to-end service can still be normally implemented after protection switching is performed. In the prior art, after protection switching, the DHCP terminal needs to initiate the DHCP request message. By contrast, in this embodiment of the present invention, quick protection switching of the end-to-end service can be implemented, and therefore reliability of service transmission between a user terminal and the network side can be improved.

It should be further understood that in this embodiment of the present invention, the first device is an optical network device that is in the optical network system and that is configured to access the user terminal (corresponding to the DHCP terminal in this embodiment of the present invention). For example, the first device is placed on a customer end premises side and is configured to access the user terminal, such as a DHCP client. Specifically, the first device may be an optical network terminal ONT or may be an optical network unit ONU. This is not limited in this embodiment of the present invention. It should be further understood that the second device is an office end device in the optical network system, for example, is connected to an upper end (convergence layer) switch by using a cable. The second device is configured to implement a function such as control or management on an ONU on a user end. Specifically, the second device is, for example, an optical line terminal OLT.

It should be understood that optical network units ONUs are classified into a primary optical network unit and a passive optical network unit. A passive optical network (Passive Optical Network, "PON" for short) is connected to the optical line terminal OLT by using a single fiber, and then the OLT is connected to the ONU. The ONU provides a service such as data or IPTV (interactive personality TV). The optical network terminal (Optical network terminal, "ONT" for short) is a product in an xPON network access scheme. Generally, the ONT is the ONU and is an optical network terminal used as the user end. Strictly, the ONT is part of the ONU. A difference between the ONT and the ONU is that the ONT is an optical network terminal and is directly located at the user end, while the ONU is an optical network unit, and there may be another network between the ONU and the user end, such as the Ethernet. Specifically, for example, the ONU may be connected to a gateway device at an xDSL (adsl or vdsl) port or an Ethernet access port, and then is connected to a network terminal.

The foregoing descriptions of the second device are also applicable to the third device. For example, the third device is an OLT.

Optionally, in this embodiment of the present invention, the first device is an optical network unit ONU or an optical network terminal ONT, and both the second device and the third device are optical line terminals OLTs.

It should be understood that the second device and the third device may also be other routers.

Specifically, a scenario shown in FIG. 1 is used as an example. An ONU obtains identification information of a DHCP terminal after detecting that protection switching is performed, generates a DHCP request message, and sends the DHCP request message to an OLT 2 by using a secondary port. The OLT 2 sends the DHCP request message to a DHCP server. The DHCP server allocates an IP address to the DHCP terminal, and delivers a DHCP response message that includes the IP address. The OLT 2 delivers the DHCP response message to the ONU. The ONU sends, to the DHCP terminal, the IP address allocated by the DHCP server. In this way, the DHCP terminal accesses a network and performs successful communication. In this process, the OLT 2 creates a DHCP snooping binding table after receiving the DHCP response message, and after receiving the DHCP response message, completes the DHCP snooping binding table and generates a MAC/IP binding table.

It should be understood that the DHCP snooping binding table and the MAC/IP binding table that are generated on the OLT 2 record the identification information of the DHCP terminal, such as a MAC address or an IP address of the DHCP terminal, and further record port information, that is, information about the secondary port of the ONU, or the like. It should be further understood that the DHCP snooping binding table and the MAC/IP binding table that are configured on the OLT 2 are consistent with a DHCP snooping binding table and a MAC/IP binding table that are configured on an OLT 1 before protection switching, so that a service performed after the switching is consistent with that performed before the switching, and a user senses no difference during network surfing.

Optionally, in this embodiment of the present invention, the DHCP request message may also be referred to as a DHCP lease renewal packet. Correspondingly, the DHCP response message may also be referred to as a DHCP lease renewal response packet.

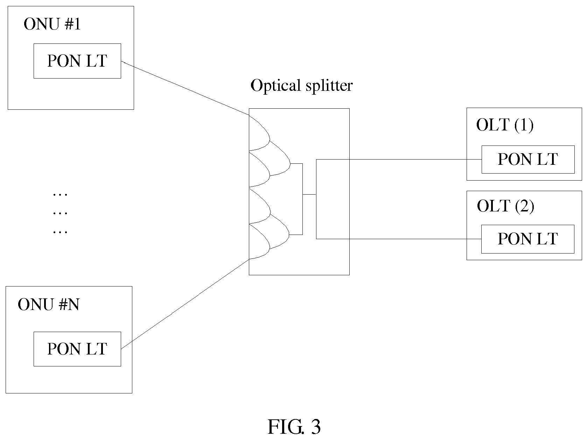

That a first device is an ONU and a second device and a third device are OLTs is used as an example below to describe a networking architecture of a protection group based on an optical network system. FIG. 3 shows a networking structure of a protection group. An ONU #1 is connected to an OLT (1) and an OLT (2) by using an optical splitter. For example, the optical splitter is an N:2 optical splitter. It should be understood that a plurality of ONUs on the ONU side may be connected to the optical splitter, such as an ONU #1 to an ONU #N shown in FIG. 3.

It should be understood that a networking type of the protection group based on the optical network system includes type B single-homing, type B dual-homing, type C single-homing, type C dual-homing, type D single-homing, and type D dual-homing. This embodiment of the present invention relates to only a dual-homing scenario, that is, two OLT PON ports that are separately connected to a primary port and a secondary port of the ONU belong to two different OLTs. That is, the ONU is connected to two different OLTs by using the primary port and the secondary port, as shown in FIG. 3.

Therefore, this embodiment of the present invention provides a method for quickly updating a DHCP snooping binding table and a MAC/IP binding table of an OLT on a switching path after protection switching, so that an end-to-end service can be quickly resumed.

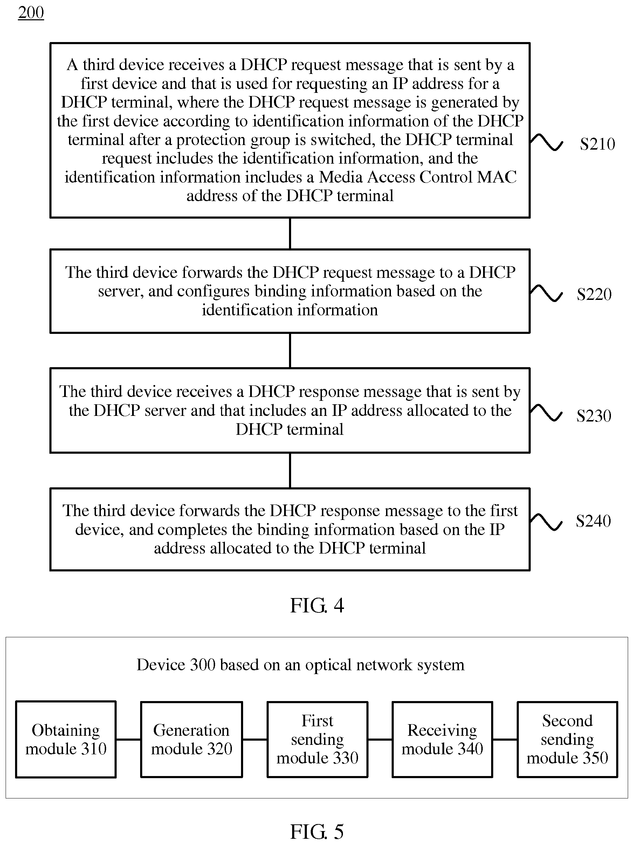

The communication method based on an optical network system according to the embodiments of the present invention is described in FIG. 2 from a perspective of a first device (an ONU or an ONT). The communication method based on an optical network system according to the embodiments of the present invention is described from a perspective of a third device (an OLT) with reference to FIG. 4 below.

FIG. 4 is a flowchart of a communication method 200 based on an optical network system according to an embodiment of the present invention. The optical network system includes a protection group, the protection group includes a first device on a Dynamic Host Configuration Protocol DHCP terminal side and a second device and a third device that are on a DHCP server side, a primary port of the first device is connected to the second device, and a secondary port of the first device is connected to the third device. The method 200 includes the following steps.

S210. The third device receives a DHCP request message that is sent by the first device and that is used for requesting an IP address for the DHCP terminal, where the DHCP request message is generated by the first device according to identification information of the DHCP terminal after the protection group is switched, the DHCP request message includes the identification information, and the identification information includes a Media Access Control MAC address of the DHCP terminal.

Specifically, for a process in which the first device generates the DHCP request message according to the identification information of the DHCP terminal after the protection group is switched, refer to descriptions in S110.

It should be understood that, that the protection group is switched means that a working port of the first device is switched from the primary port to the secondary port. That is, when detecting that the primary port is switched to the secondary port, the first device determines that the protection group is switched.

It should be understood that the DHCP request message includes the MAC address of the DHCP terminal. This step may be understood as that the first device simulates a process in which the DHCP request messages an IP address from a server.

Optionally, in this embodiment of the present invention, the identification information of the DHCP terminal further includes virtual local area network VLAN information of the DHCP terminal.

S220. The third device forwards the DHCP request message to the DHCP server, and configures binding information based on the identification information.

The binding information is, for example, a DHCP snooping binding table. Specifically, the third device creates the DHCP snooping binding table based on the identification information. The newly created DHCP snooping binding table includes information such as the MAC address of the DHCP terminal and port information (indicating the secondary port).

S230. The third device receives a DHCP response message that is sent by the DHCP server and that includes an IP address allocated to the DHCP terminal.

It should be understood that the DHCP server allocates the IP address to the DHCP terminal according to the DHCP request message, and delivers the DHCP response message that includes the allocated IP address. It should be understood that the DHCP response message may further include information such as an IP address lease time.

S240. The third device forwards the DHCP response message to the first device, and completes the binding information based on the IP address allocated to the DHCP terminal.

Optionally, in this embodiment of the present invention, the binding information configured by the third device includes the DHCP snooping binding table, a MAC binding table, and an IP binding table.

After receiving the DHCP response message, the third device forwards the DHCP response message to the first device, completes the DHCP snooping binding table based on the DHCP response message, and generates the MAC binding table and the IP binding table. The completed DHCP snooping binding table further includes the IP address allocated to the DHCP terminal, and may further include IP address lease time information. The IP binding table includes the IP address allocated to the DHCP terminal. The MAC binding table includes the MAC address of the DHCP terminal.

Optionally, in this embodiment of the present invention, the DHCP request message is a DHCP request, and the DHCP response message is a DHCP Ack.

Therefore, in this embodiment of the present invention, the first device on the DHCP terminal side generates the DHCP request message according to the identification information of the DHCP terminal after detecting that the protection group is switched, and sends the DHCP request message to the DHCP server by using a working path used after the switching, and correspondingly, receives, by using the working path used after the switching, the DHCP response message that is delivered by the DHCP server and that includes the allocated IP address. In this process, the third device on the working path used after the switching generates the corresponding DHCP snooping binding table and the corresponding MAC/IP binding table by snooping the DHCP request message and the DHCP response message, so that an end-to-end service can still be normally implemented after protection switching is performed. In the prior art, after protection switching, the DHCP terminal needs to initiate the DHCP request message. By contrast, in this embodiment of the present invention, quick protection switching of the end-to-end service can be implemented, and therefore reliability of service transmission between a user terminal and a network side can be improved.

It should be further understood that in this embodiment of the present invention, the first device is an optical network device that is in the optical network system and that is configured to access the user terminal (corresponding to the DHCP terminal in this embodiment of the present invention). For example, the first device is placed on a customer premises side and is configured to access the user terminal, such as a DHCP client. Specifically, the first device may be an optical network terminal ONT or may be an optical network unit ONU. This is not limited in this embodiment of the present invention. It should be further understood that the second device is an office end device in the optical network system, for example, is connected to an upper end (convergence layer) switch by using a cable. The second device is configured to implement a function such as control or management on an ONU on a user end. Specifically, the second device is, for example, an optical line terminal OLT.

It should be understood that optical network units ONUs are classified into a primary optical network unit and a passive optical network unit. A passive optical network (Passive Optical Networks, "PON" for short) is connected to the optical line terminal OLT by using a single fiber, and then the OLT is connected to the ONU. The ONU provides a service such as data or IPTV (interactive personality TV). The optical network terminal (Optical network terminal, "ONT" for short) is a product in an xPON network access scheme. Generally, the ONT is the ONU and is an optical network terminal used as the user end. Strictly, the ONT is part of the ONU. A difference between the ONT and the ONU is that the ONT is an optical network terminal and is directly located at the user end, while the ONU is an optical network unit, and there may be another network between the ONU and the user end, such as the Ethernet. Specifically, for example, the ONU may be connected to a gateway device at an xDSL (adsl or vdsl) port or an Ethernet access port, and then is connected to a network terminal.

The foregoing descriptions of the second device are also applicable to the third device. For example, the third device is an OLT.

Optionally, in this embodiment of the present invention, the first device is an optical network unit ONU or an optical network terminal ONT, and both the second device and the third device are optical line terminals OLTs.

It should be understood that the second device and the third device may also be other routers.

In this embodiment of the present invention, the first device on the DHCP terminal side generates the DHCP request message according to the identification information of the DHCP terminal after detecting that the protection group is switched, and sends the DHCP request message to the DHCP server by using a working path used after the switching, and correspondingly, receives, by using the working path used after the switching, the DHCP response message that is delivered by the DHCP server and that includes the allocated IP address. In this process, the third device on the working path used after the switching generates the corresponding DHCP snooping binding table and the corresponding MAC/IP binding table by snooping the DHCP request message and the DHCP response message, so that an end-to-end service can still be normally implemented after protection switching is performed. In the prior art, after protection switching, the DHCP terminal needs to initiate the DHCP request message. By contrast, in this embodiment of the present invention, quick protection switching of the end-to-end service can be implemented, and therefore reliability of service transmission between a user terminal and a network side can be improved. Therefore, this embodiment of the present invention provides a method for quickly updating a DHCP snooping binding table and a MAC/IP binding table of an OLT on a switching path after protection switching, so that an end-to-end service can be quickly resumed.

FIG. 5 is a schematic block diagram of a device 300 based on an optical network system according to an embodiment of the present invention. The optical network system includes a protection group, the protection group includes the device on a Dynamic Host Configuration Protocol DHCP terminal side and a second device and a third device that are on a DHCP server side, a primary port of the device is connected to the second device, and a secondary port of the device is connected to the third device. The device 300 includes:
an obtaining module 310, configured to obtain identification information of a DHCP terminal when detecting that the protection group is switched, where the identification information includes a Media Access Control MAC address of the DHCP terminal;
a generation module 320, configured to generate, according to the identification information obtained by the obtaining module, a DHCP request message used for requesting an IP address for the DHCP terminal, where the DHCP request message includes the identification information;
a first sending module 330, configured to send, to the third device by using the secondary port, the DHCP request message generated by the generation module, so that the third device forwards the DHCP request message to a DHCP server;
a receiving module 340, configured to receive a DHCP response message sent by the third device, where the DHCP response message is received by the third device from the DHCP server, and the DHCP response message includes an IP address allocated by the DHCP server to the DHCP terminal; and
a second sending module 350, configured to send, to the DHCP terminal, the IP address that is received by the receiving module and that is allocated by the DHCP server to the DHCP terminal, so that the DHCP terminal transmits a service to the DHCP server based on a secondary path on which the third device is located.

Therefore, in this embodiment of the present invention, the device on the DHCP terminal side generates the DHCP request message according to the identification information of the DHCP terminal after detecting that the protection group is switched, and sends the DHCP request message to the DHCP server by using a working path used after the switching, and correspondingly, receives, by using the working path used after the switching, the DHCP response message that is delivered by the DHCP server and that includes the allocated IP address. In this process, the third device on the working path used after the switching generates a corresponding DHCP snooping binding table and a corresponding MAC/IP binding table by snooping the DHCP request message and the DHCP response message, so that an end-to-end service can still be normally implemented after protection switching is performed. In the prior art, after protection switching, the DHCP terminal needs to initiate the DHCP request message. By contrast, in this embodiment of the present invention, quick protection switching of the end-to-end service can be implemented, and therefore reliability of service transmission between a user terminal and a network side can be improved.

Optionally, in this embodiment of the present invention, the device is an optical network unit ONU or an optical network terminal ONT, and both the second device and the third device are optical line terminals OLTs.

Optionally, in this embodiment of the present invention, the identification information of the DHCP terminal further includes virtual local area network VLAN information of the DHCP terminal.

Optionally, in this embodiment of the present invention, the DHCP request message is a DHCP request, and the DHCP response message is a DHCP Ack.

It should be understood that the device 300 according to this embodiment of the present invention may be corresponding to the first device in the communication method based on an optical network system in the embodiments of the present invention, and the foregoing and other operations and/or functions of the modules of the device 300 are separately used to implement corresponding procedures of the methods in FIG. 2 to FIG. 4. For brevity, details are not described herein again.

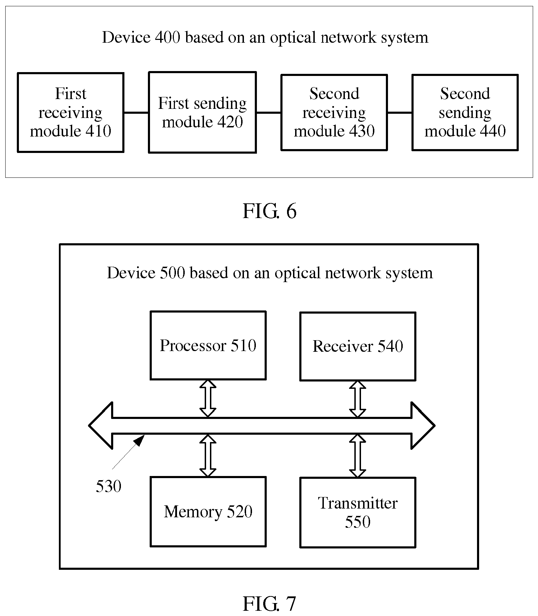

FIG. 6 shows a device 400 based on an optical network system according to an embodiment of the present invention. The optical network system includes a protection group, the protection group includes a first device on a Dynamic Host Configuration Protocol DHCP terminal side and a second device and the device that are on a DHCP server side, a primary port of the first device is connected to the second device, and a secondary port of the first device is connected to the device. The device 400 includes:
a first receiving module 410, configured to receive a DHCP request message that is sent by the first device and that is used for requesting an IP address for the DHCP terminal, where the DHCP request message is generated by the first device according to identification information of the DHCP terminal after the protection group is switched, the DHCP request message includes the identification information, and the identification information includes a Media Access Control MAC address of the DHCP terminal;
a first sending module 420, configured to: forward the DHCP request message received by the first receiving module to a DHCP server, and configure binding information based on the identification information;
a second receiving module 430, configured to receive a DHCP response message that is sent by the DHCP server and that includes an IP address allocated to the DHCP terminal; and
a second sending module 440, configured to: forward the DHCP response message received by the second receiving module to the first device, and complete the binding information based on the IP address allocated to the DHCP terminal.

Therefore, in this embodiment of the present invention, the first device on the DHCP terminal side generates the DHCP request message according to the identification information of the DHCP terminal after detecting that the protection group is switched, and sends the DHCP request message to the DHCP server by using a working path used after the switching, and correspondingly, receives, by using the working path used after the switching, the DHCP response message that is delivered by the DHCP server and that includes the allocated IP address. In this process, the device on the working path used after the switching generates a corresponding DHCP snooping binding table and a corresponding MAC/IP binding table by snooping the DHCP request message and the DHCP response message, so that an end-to-end service can still be normally implemented after protection switching is performed. In the prior art, after protection switching, the DHCP terminal needs to initiate the DHCP request message. By contrast, in this embodiment of the present invention, quick protection switching of the end-to-end service can be implemented, and therefore reliability of service transmission between a user terminal and a network side can be improved.

Optionally, in this embodiment of the present invention, the first device is an optical network unit ONU or an optical network terminal ONT, and both the second device and the device are optical line terminals OLTs.

Optionally, in this embodiment of the present invention, the identification information of the DHCP terminal further includes virtual local area network VLAN information of the DHCP terminal.

Optionally, in this embodiment of the present invention, the binding information configured by the device includes the DHCP snooping binding table, the MAC binding table, and the IP binding table.

Optionally, in this embodiment of the present invention, the DHCP request message is a DHCP request, and the DHCP response message is a DHCP Ack.

It should be understood that the device 400 according to this embodiment of the present invention may be corresponding to the third device in the communication method based on an optical network system in the embodiments of the present invention, and the foregoing and other operations and/or functions of the modules of the device 400 are separately used to implement corresponding procedures of the methods in FIG. 2 to FIG. 4. For brevity, details are not described herein again.

As shown in FIG. 7, an embodiment of the present invention further provides a device 500 based on an optical network system. The optical network system includes a protection group, the protection group includes the device 500 on a Dynamic Host Configuration Protocol DHCP terminal side and a second device and a third device that are on a DHCP server side, a primary port of the device 500 is connected to the second device, and a secondary port of the device 500 is connected to the third device. The device 500 includes a processor 510, a memory 520, a bus system 530, a receiver 540, and a transmitter 550. The processor 510, the memory 520, the receiver 540, and the transmitter 550 are connected by using the bus system 530. The memory 520 is configured to store an instruction. The processor 510 is configured to execute the instruction stored in the memory 520, to control the receiver 540 to receive a signal and control the transmitter 550 to send a signal. The processor 510 is configured to: obtain identification information of the DHCP terminal when detecting that the protection group is switched, where the identification information includes a Media Access Control MAC address of the DHCP terminal; and generate, according to the identification information, a DHCP request message used for requesting an IP address for the DHCP terminal, where the DHCP request message includes the identification information. The transmitter 550 is configured to send the DHCP request message to the third device by using the secondary port, so that the third device forwards the DHCP request message to a DHCP server. The receiver 540 is configured to: receive a DHCP response message sent by the third device, where the DHCP response message is received by the third device from the DHCP server, and the DHCP response message includes an IP address allocated by the DHCP server to the DHCP terminal. The transmitter 550 is configured to send, to the DHCP terminal, the IP address allocated by the DHCP server to the DHCP terminal, so that the DHCP terminal transmits a service to the DHCP server based on a secondary path on which the third device is located.

Therefore, in this embodiment of the present invention, the first device on the DHCP terminal side generates the DHCP request message according to the identification information of the DHCP terminal after detecting that the protection group is switched, and sends the DHCP request message to the DHCP server by using a working path used after the switching, and correspondingly, receives, by using the working path used after the switching, the DHCP response message that is delivered by the DHCP server and that includes the allocated IP address. In this process, the third device on the working path used after the switching generates a corresponding DHCP snooping binding table and a corresponding MAC/IP binding table by snooping the DHCP request message and the DHCP response message, so that an end-to-end service can still be normally implemented after protection switching is performed. In the prior art, after protection switching, the DHCP terminal needs to initiate the DHCP request message. By contrast, in this embodiment of the present invention, quick protection switching of the end-to-end service can be implemented, and therefore reliability of service transmission between a user terminal and a network side can be improved.

Optionally, in an embodiment, the device 500 is an optical network unit ONU or an optical network terminal ONT, and both the second device and the third device are optical line terminals OLTs.

Optionally, in an embodiment, the identification information of the DHCP terminal further includes virtual local area network VLAN information of the DHCP terminal.

It should be understood that in this embodiment of the present invention, the processor 510 may be a central processing unit (Central Processing Unit, "CPU" for short), or the processor 510 may be another general purpose processor, a digital signal processor (DSP), an application-specific integrated circuit (ASIC), a field programmable gate array (FPGA) or another programmable logic device, a discrete gate or a transistor logic device, a discrete hardware component, or the like. The general purpose processor may be a microprocessor, or the processor may be any conventional processor, or the like.

The memory 520 may include a read-only memory and a random access memory, and provide an instruction and data for the processor 510. A part of the memory 520 may further include a non-volatile random access memory. For example, the memory 520 may further store information about a device type.

The bus system 530 may include a power bus, a control bus, a status signal bus, and the like in addition to a data bus. However, for clear description, various types of buses in the figure are marked as the bus system 530.

In an implementation process, steps of the foregoing methods may be implemented by using a hardware integrated logical circuit in the processor 510, or by using instructions in a form of software. The steps of the method disclosed with reference to the embodiments of the present invention may be directly performed by a hardware processor, or may be performed by using a combination of hardware and software modules in the processor. The software module may be located in a mature storage medium in the art, such as a random access memory, a flash memory, a read-only memory, a programmable read-only memory, an electrically erasable programmable memory, or a register. The storage medium is located in the memory 520, and the processor 510 reads information in the memory 520 and completes the steps of the foregoing methods in combination with hardware of the processor. To avoid repetition, details are not described herein again.

It should be understood that the device 500 according to this embodiment of the present invention may be corresponding to the first device in the communication method based on an optical network system in the embodiments of the present invention, and may be corresponding to the device 300 according to the embodiments of the present invention, and the foregoing and other operations and/or functions of the modules of the device 500 are separately used to implement corresponding procedures of the methods in FIG. 2 to FIG. 4. For brevity, details are not described herein again.

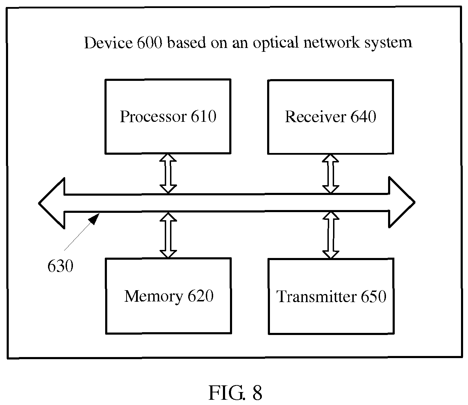

As shown in FIG. 8, an embodiment of the present invention provides a device 600 based on an optical network system. The optical network system includes a protection group, the protection group includes a first device on a Dynamic Host Configuration Protocol DHCP terminal side and a second device and the device 600 that are on a DHCP server side, a primary port of the first device is connected to the second device, and a secondary port of the first device is connected to the device 600. The device 600 includes a processor 610, a memory 620, a bus system 630, a receiver 640, and a transmitter 650. The processor 610, the memory 620, the receiver 640, and the transmitter 650 are connected by using the bus system 630. The memory 620 is configured to store an instruction. The processor 610 is configured to execute the instruction stored in the memory 620, to control the receiver 640 to receive a signal and control the transmitter 650 to send a signal. The receiver 640 is configured to receive a DHCP request message that is sent by the first device and that is used for requesting an IP address for the DHCP terminal, where the DHCP request message is generated by the first device according to identification information of the DHCP terminal after the protection group is switched, the DHCP request message includes the identification information, and the identification information includes a Media Access Control MAC address of the DHCP terminal. The transmitter 650 is configured to: forward the DHCP request message to the DHCP server, and configure binding information based on the identification information. The receiver 640 is configured to receive a DHCP response message that is sent by the DHCP server and that includes an IP address allocated to the DHCP terminal. The transmitter 650 is configured to: forward the DHCP response message to the first device, and complete the binding information based on the IP address allocated to the DHCP terminal.

Therefore, in this embodiment of the present invention, the first device on the DHCP terminal side generates the DHCP request message according to the identification information of the DHCP terminal after detecting that the protection group is switched, and sends the DHCP request message to the DHCP server by using a working path used after the switching, and correspondingly, receives, by using the working path used after the switching, the DHCP response message that is delivered by the DHCP server and that includes the allocated IP address. In this process, the third device on the working path used after the switching generates a corresponding DHCP snooping binding table and a corresponding MAC/IP binding table by snooping the DHCP request message and the DHCP response message, so that an end-to-end service can still be normally implemented after protection switching is performed. In the prior art, after protection switching, the DHCP terminal needs to initiate the DHCP request message. By contrast, in this embodiment of the present invention, quick protection switching of the end-to-end service can be implemented, and therefore reliability of service transmission between a user terminal and a network side can be improved.

Optionally, in an embodiment, the first device is an optical network unit ONU or an optical network terminal ONT, and both the second device and the device 600 are optical line terminals OLTs.

Optionally, in an embodiment, the identification information of the DHCP terminal further includes virtual local area network VLAN information of the DHCP terminal.

Optionally, in an embodiment, the binding information configured by the device 600 includes the DHCP snooping binding table, the MAC binding table, and the IP binding table.

It should be understood that in this embodiment of the present invention, the processor 610 may be a central processing unit (Central Processing Unit, "CPU" for short), or the processor 610 may be another general purpose processor, a digital signal processor (DSP), an application-specific integrated circuit (ASIC), a field programmable gate array (FPGA) or another programmable logic device, a discrete gate or a transistor logic device, a discrete hardware component, or the like. The general purpose processor may be a microprocessor, or the processor may be any conventional processor, or the like.

The memory 620 may include a read-only memory and a random access memory, and provide an instruction and data for the processor 610. A part of the memory 620 may further include a non-volatile random access memory. For example, the memory 620 may further store information about a device type.

The bus system 630 may include a power bus, a control bus, a status signal bus, and the like in addition to a data bus. However, for clear description, various types of buses in the figure are marked as the bus system 630.

In an implementation process, steps of the foregoing methods may be implemented by using a hardware integrated logical circuit in the processor 610, or by using instructions in a form of software. The steps of the method disclosed with reference to the embodiments of the present invention may be directly performed by a hardware processor, or may be performed by using a combination of hardware and software modules in the processor. The software module may be located in a mature storage medium in the art, such as a random access memory, a flash memory, a read-only memory, a programmable read-only memory, an electrically erasable programmable memory, or a register. The storage medium is located in the memory 620, and the processor 610 reads information in the memory 620 and completes the steps of the foregoing methods in combination with hardware of the processor. To avoid repetition, details are not described herein again.

It should be understood that the device 600 according to this embodiment of the present invention may be corresponding to the third device in the communication method based on an optical network system in the embodiments of the present invention, and may be corresponding to the device 400 according to the embodiments of the present invention, and the foregoing and other operations and/or functions of the modules of the device 600 are separately used to implement corresponding procedures of the methods in FIG. 2 to FIG. 4. For brevity, details are not described herein again.

It should be further understood that "first", "second", "third", "fourth", and various numbers in this specification are merely used for differentiation for ease of description, and are not construed as a limitation on the scope of the embodiments of the present invention.

The term "and/or" in this specification describes only an association relationship for describing associated objects and represents that three relationships may exist. For example, A and/or B may represent the following three cases: Only A exists, both A and B exist, and only B exists. In addition, the character "/" in this specification generally indicates an "or" relationship between the associated objects.

It should be understood that sequence numbers of the foregoing processes do not mean execution sequences in various embodiments of the present invention. The execution sequences of the processes should be determined according to functions and internal logic of the processes, and should not be construed as any limitation on the implementation processes of the embodiments of the present invention.

A person of ordinary skill in the art may be aware that, in combination with the examples described in the embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of the present invention.

It may be clearly understood by a person skilled in the art that, for the purpose of convenient and brief description, for a detailed working process of the foregoing system, apparatus, and unit, reference may be made to a corresponding process in the foregoing method embodiments, and details are not described herein again.

In the several embodiments provided in this application, it should be understood that the disclosed system, apparatus, and method may be implemented in other manners. For example, the described apparatus embodiment is merely an example. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected according to actual requirements to achieve the objectives of the solutions of the embodiments.

In addition, functional units in the embodiments of the present invention may be integrated into one processing unit, or each of the units may exist alone physically, or two or more units are integrated into one unit.

When the functions are implemented in the form of a software functional unit and sold or used as an independent product, the functions may be stored in a computer readable storage medium. Based on such an understanding, the technical solutions of the present invention essentially, or the part contributing to the prior art, or some of the technical solutions may be implemented in a form of a software product. The software product is stored in a storage medium, and includes several instructions for instructing a computer device (which may be a personal computer, a server, or a network device) to perform all or some of the steps of the methods described in the embodiments of the present invention. The foregoing storage medium includes: any medium that can store program code, such as a USB flash drive, a removable hard disk, a read-only memory (ROM, Read-Only Memory), a random access memory (RAM, Random Access Memory), a magnetic disk, or an optical disc.

The foregoing descriptions are merely specific implementations of the present invention, but are not intended to limit the protection scope of the present invention. Any variation or replacement readily figured out by a person skilled in the art within the technical scope disclosed in the present invention shall fall within the protection scope of the present invention. Therefore, the protection scope of the present invention shall be subject to the protection scope of the claims.

## Claims

1. A communication method for an optical network system, wherein the optical network system comprises a protection group, the protection group comprises a first device on a Dynamic Host Configuration Protocol, DHCP, terminal side and a second device and a third device that are on a DHCP server side, a primary port of the first device is connected to the second device, and a secondary port of the first device is connected to the third device; and the method comprises:
obtaining, by the first device, identification information of a DHCP terminal when detecting that a working port of the first device is switched from the primary port to the secondary port, wherein the identification information comprises a Media Access Control, MAC, address of the DHCP terminal;
generating, by the first device according to the identification information, a DHCP request message used for requesting an IP address for the DHCP terminal, wherein the DHCP request message comprises the identification information;
sending, by the first device, the DHCP request message to the third device by using the secondary port, so that the third device forwards the DHCP request message to a DHCP server;
receiving, by the first device, a DHCP response message sent by the third device, wherein the DHCP response message is received by the third device from the DHCP server, and the DHCP response message comprises an IP address allocated by the DHCP server to the DHCP terminal; and
sending, by the first device to the DHCP terminal, the IP address allocated by the DHCP server to the DHCP terminal, so that the DHCP terminal transmits a service to the DHCP server by using a secondary path on which the third device is located.

2. The method according to claim 1, wherein the first device is an optical network unit, ONU, or an optical network terminal, ONT, and both the second device and the third device are optical line terminals, OLTs.

3. The method according to claim 1 or 2, wherein the identification information of the DHCP terminal further comprises virtual local area network, VLAN, information of the DHCP terminal.

4. A communication method for an optical network system, wherein the optical network system comprises a protection group, the protection group comprises a first device on a Dynamic Host Configuration Protocol, DHCP, terminal side and a second device and a third device that are on a DHCP server side, a primary port of the first device is connected to the second device, and a secondary port of the first device is connected to the third device; and the method comprises:
receiving, by the third device, a DHCP request message that is sent by the first device and that is used for requesting an IP address for the DHCP terminal, wherein the DHCP request message is generated by the first device according to identification information of the DHCP terminal after the protection group is switched, the DHCP request message comprises the identification information, and the identification information comprises a Media Access Control, MAC, address of the DHCP terminal;
forwarding, by the third device, the DHCP request message to a DHCP server, and configuring binding information based on the identification information;
receiving, by the third device, a DHCP response message that is sent by the DHCP server and that comprises an IP address allocated to the DHCP terminal; and
forwarding, by the third device, the DHCP response message to the first device, and completing the binding information based on the IP address allocated to the DHCP terminal.

5. The method according to claim 4, wherein the first device is an optical network unit, ONU, or an optical network terminal, ONT, and both the second device and the third device are optical line terminals, OLTs.

6. The method according to claim 4 or 5, wherein the identification information of the DHCP terminal further comprises virtual local area network, VLAN, information of the DHCP terminal.

7. The method according to any one of claims 4 to 6, wherein the binding information configured by the third device comprises a DHCP snooping binding table, a MAC binding table, and an IP binding table.

8. A device for an optical network system, wherein the optical network system comprises a protection group, the protection group comprises the device on a Dynamic Host Configuration Protocol, DHCP, terminal side and a second device and a third device that are on a DHCP server side, a primary port of the device is connected to the second device, and a secondary port of the device is connected to the third device; and the device comprises:
an obtaining module (310), configured to obtain identification information of a DHCP terminal when detecting that a working port of the first device is switched from the primary port to the secondary port, wherein the identification information comprises a Media Access Control, MAC, address of the DHCP terminal;
a generation module (320), configured to generate, according to the identification information obtained by the obtaining module, a DHCP request message used for requesting an IP address for the DHCP terminal, wherein the DHCP request message comprises the identification information;
a first sending module (330), configured to send, to the third device by using the secondary port, the DHCP request message generated by the generation module, so that the third device forwards the DHCP request message to a DHCP server;
a receiving module (340), configured to receive a DHCP response message sent by the third device, wherein the DHCP response message is received by the third device from the DHCP server, and the DHCP response message comprises an IP address allocated by the DHCP server to the DHCP terminal; and
a second sending module (350), configured to send, to the DHCP terminal, the IP address that is received by the receiving module and that is allocated by the DHCP server to the DHCP terminal, so that the DHCP terminal transmits a service to the DHCP server by using a secondary path on which the third device is located.

9. The device according to claim 8, wherein the device is an optical network unit ONU or an optical network terminal, ONT, and both the second device and the third device are optical line terminals, OLTs.

10. The device according to claim 8 or 9, wherein the identification information of the DHCP terminal further comprises virtual local area network, VLAN, information of the DHCP terminal.

11. A device for an optical network system, wherein the optical network system comprises a protection group, the protection group comprises a first device on a Dynamic Host Configuration Protocol, DHCP, terminal side and a second device and the device that are on a DHCP server side, a primary port of the first device is connected to the second device, and a secondary port of the first device is connected to the device; and the device comprises:
a first receiving module (410), configured to receive a DHCP request message that is sent by the first device and that is used for requesting an IP address for the DHCP terminal, wherein the DHCP request message is generated by the first device according to identification information of the DHCP terminal after the protection group is switched, the DHCP request message comprises the identification information, and the identification information comprises a Media Access Control, MAC, address of the DHCP terminal;
a first sending module (420), configured to: forward the DHCP request message received by the first receiving module to a DHCP server, and configure binding information based on the identification information;
a second receiving module (430), configured to receive a DHCP response message that is sent by the DHCP server and that comprises an IP address allocated to the DHCP terminal; and
a second sending module (440), configured to: forward the DHCP response message received by the second receiving module to the first device, and complete the binding information based on the IP address allocated to the DHCP terminal.

12. The device according to claim 11, wherein the first device is an optical network unit, ONU, or an optical network terminal, ONT, and both the second device and the device are optical line terminals, OLTs.

13. The device according to claim 11 or 12, wherein the identification information of the DHCP terminal further comprises virtual local area network, VLAN, information of the DHCP terminal.

14. The device according to any one of claims 11 to 13, wherein the binding information configured by the device comprises a DHCP snooping binding table, a MAC binding table, and an IP binding table.

## Patentansprüche

1. Kommunikationsverfahren für ein optisches Netzwerksystem, wobei das optische Netzwerksystem eine Schutzgruppe umfasst; die Schutzgruppe eine erste endgeräteseitige Einrichtung nach dem "Dynamic Host Configuration Protocol", DHCP, und eine zweite Einrichtung und eine dritte Einrichtung auf einer DHCP-Serverseite umfasst; ein primärer Anschluss der ersten Einrichtung mit der zweiten Einrichtung verbunden ist; und ein sekundärer Anschluss der ersten Einrichtung mit der dritten Einrichtung verbunden ist; und das Verfahren umfasst:
Erhalten von Identifizierungsinformation eines DHCP-Endgeräts durch die erste Einrichtung, wenn detektiert wird, dass ein Arbeitsanschluss der ersten Einrichtung von dem primären Anschluss zu dem sekundären Anschluss umgeschaltet wird, wobei die Identifizierungsinformation eine Medienzugriffssteuerungs-, MAC-, -Adresse des DHCP-Endgeräts umfasst;
Erzeugen einer DHCP-Anforderungsnachricht durch die erste Einrichtung entsprechend der Identifizierungsinformation, verwendet zum Anfordern einer IP-Adresse für das DHCP-Endgerät, wobei die DHCP-Anforderungsnachricht die Identifizierungsinformation umfasst;
Senden der DHCP-Anforderungsnachricht durch die erste Einrichtung zu der dritten Einrichtung unter Verwendung des sekundären Anschlusses, sodass die dritte Einrichtung die DHCP-Anforderungsnachricht zu einem DHCP-Server weiterleitet;
Empfangen einer durch die dritte Einrichtung gesendeten DHCP-Antwortnachricht durch die erste Einrichtung, wobei die DHCP-Antwortnachricht durch die dritte Einrichtung von dem DHCP-Server empfangen wird und die DHCP-Antwortnachricht eine durch den DHCP-Server dem DHCP-Endgerät zugewiesene IP-Adresse umfasst; und
Senden der durch den DHCP-Server dem DHCP-Endgerät zugewiesenen IP-Adresse durch die erste Einrichtung zu dem DHCP-Endgerät, sodass das DHCP-Endgerät einen Dienst zu dem DHCP-Server unter Verwendung eines sekundären Pfads, auf dem die dritte Einrichtung positioniert ist, überträgt.

2. Verfahren nach Anspruch 1, wobei die erste Einrichtung eine optische Netzwerkeinheit, ONU, oder ein optisches Netzwerkendgerät, ONT, ist und sowohl die zweite Einrichtung als auch die dritte Einrichtung optische Leitungsabschlüsse, OLTs, sind.

3. Verfahren nach Anspruch 1 oder 2, wobei die Identifizierungsinformation des DHCP-Endgeräts ferner "Virtual Local Area Network"-, VLAN-, -Information des DHCP-Endgeräts umfasst.

4. Kommunikationsverfahren für ein optisches Netzwerksystem, wobei das optische Netzwerksystem eine Schutzgruppe umfasst; die Schutzgruppe eine erste endgeräteseitige Einrichtung nach dem "Dynamic Host Configuration Protocol", DHCP, und eine zweite Einrichtung und eine dritte Einrichtung auf einer DHCP-Serverseite umfasst; ein primärer Anschluss der ersten Einrichtung mit der zweiten Einrichtung verbunden ist; und ein sekundärer Anschluss der ersten Einrichtung mit der dritten Einrichtung verbunden ist; und das Verfahren umfasst:
Empfangen, durch die dritte Einrichtung, einer von der ersten Einrichtung gesendeten DHCP-Anforderungsnachricht, die zum Anfordern einer IP-Adresse für das DHCP-Endgerät verwendet wird, wobei die DHCP-Anforderungsnachricht durch die erste Einrichtung gemäß Identifizierungsinformation des DHCP-Endgeräts nach dem Umschalten der Schutzgruppe erzeugt wird; die DHCP-Anforderungsnachricht die Identifizierungsinformation umfasst; und die Identifizierungsinformation eine Medienzugriffssteuerungs-, MAC-, -Adresse des DHCP-Endgeräts umfasst;
Weiterleiten der DHCP-Anforderungsnachricht durch die dritte Einrichtung zu einem DHCP-Server und Einrichten von Bindungsinformation basierend auf der Identifizierungsinformation;
Empfangen durch die dritte Einrichtung einer durch den DHCP-Server gesendeten DHCP-Antwortnachricht, die eine dem DHCP-Endgerät zugewiesene IP-Adresse umfasst; und
Weiterleiten der DHCP-Antwortnachricht durch die dritte Einrichtung zu der ersten Einrichtung und Vervollständigen der Bindungsinformation basierend auf der dem DHCP-Endgerät zugewiesenen IP-Adresse.

5. Verfahren nach Anspruch 4, wobei die erste Einrichtung eine optische Netzwerkeinheit, ONU, oder ein optisches Netzwerkendgerät, ONT, ist und sowohl die zweite Einrichtung als auch die dritte Einrichtung optische Leitungsabschlüsse, OLTs, sind.

6. Verfahren nach Anspruch 4 oder 5, wobei die Identifizierungsinformation des DHCP-Endgeräts ferner "Virtual Local Area Network"-, VLAN-, -Information des DHCP-Endgeräts umfasst.

7. Verfahren nach einem der Ansprüche 4 bis 6, wobei die durch die dritte Einrichtung eingerichtete Bindungsinformation eine DHCP-"Snooping"-Bindungstabelle, eine MAC-Bindungstabelle und eine IP-Bindungstabelle umfasst.

8. Einrichtung für ein optisches Netzwerksystem, wobei das optische Netzwerksystem eine Schutzgruppe umfasst; die Schutzgruppe die endgeräteseitige Einrichtung nach dem "Dynamic Host Configuration Protocol", DHCP, und eine zweite Einrichtung und eine dritte Einrichtung auf einer DHCP-Serverseite umfasst; ein primärer Anschluss der Einrichtung mit der zweiten Einrichtung verbunden ist; und ein sekundärer Anschluss der Einrichtung mit der dritten Einrichtung verbunden ist; und die Einrichtung umfasst:
ein Erhaltmodul (310), ausgelegt zum Erhalten von Identifizierungsinformation eines DHCP-Endgeräts, wenn detektiert wird, dass ein Arbeitsanschluss der ersten Einrichtung von dem primären Anschluss zu dem sekundären Anschluss umgeschaltet wird, wobei die Identifizierungsinformation eine Medienzugriffssteuerungs-, MAC-, Adresse des DHCP-Endgeräts umfasst;
ein Erzeugungsmodul (320), ausgelegt zum Erzeugen, entsprechend der von dem Erhaltmodul erhaltenen Identifizierungsinformation, einer DHCP-Anforderungsnachricht, die verwendet wird zum Anfordern einer IP-Adresse für das DHCP-Endgerät, wobei die DHCP-Anforderungsnachricht die Identifizierungsinformation umfasst;
ein erstes Sendemodul (330), ausgelegt zum Senden der durch das Erzeugungsmodul erzeugten DHCP-Anforderungsnachricht zu der dritten Einrichtung unter Verwendung des sekundären Anschlusses, sodass die dritte Einrichtung die DHCP-Anforderungsnachricht zu einem DHCP-Server weiterleitet;
ein Empfangsmodul (340), ausgelegt zum Empfangen einer durch die dritte Einrichtung gesendeten DHCP-Antwortnachricht, wobei die DHCP-Antwortnachricht durch die dritte Einrichtung von dem DHCP-Server empfangen wird und die DHCP-Antwortnachricht eine durch den DHCP-Server dem DHCP-Endgerät zugewiesene IP-Adresse umfasst; und
ein zweites Sendemodul (350), ausgelegt zum Senden der von dem Empfangsmodul empfangenen und durch den DHCP-Server dem DHCP-Endgerät zugewiesenen IP-Adresse zu dem DHCP-Endgerät, sodass das DHCP-Endgerät einen Dienst zu dem DHCP-Server unter Verwendung eines sekundären Pfads, auf dem die dritte Einrichtung positioniert ist, überträgt.

9. Einrichtung nach Anspruch 8, wobei die Einrichtung eine optische Netzwerkeinheit, ONU, oder ein optisches Netzwerkendgerät, ONT, ist und sowohl die zweite Einrichtung als auch die dritte Einrichtung optische Leitungsabschlüsse, OLTs, sind.

10. Einrichtung nach Anspruch 8 oder 9, wobei die Identifizierungsinformation des DHCP-Endgeräts ferner "Virtual Local Area Network"-, VLAN-, -Information des DHCP-Endgeräts umfasst.

11. Einrichtung für ein optisches Netzwerksystem, wobei das optische Netzwerksystem eine Schutzgruppe umfasst; die Schutzgruppe eine erste endgeräteseitige Einrichtung nach dem "Dynamic Host Configuration Protocol", DHCP, und eine zweite Einrichtung und die Einrichtung auf einer DHCP-Serverseite umfasst; ein primärer Anschluss der ersten Einrichtung mit der zweiten Einrichtung verbunden ist; und ein sekundärer Anschluss der ersten Einrichtung mit der Einrichtung verbunden ist; und die Einrichtung umfasst:
ein erstes Empfangsmodul (410), ausgelegt zum Empfangen einer von der ersten Einrichtung gesendeten DHCP-Anforderungsnachricht, die zum Anfordern einer IP-Adresse für das DHCP-Endgerät verwendet wird, wobei die DHCP-Anforderungsnachricht durch die erste Einrichtung gemäß Identifizierungsinformation des DHCP-Endgeräts nach dem Umschalten der Schutzgruppe erzeugt wird; die DHCP-Anforderungsnachricht die Identifizierungsinformation umfasst; und die Identifizierungsinformation eine Medienzugriffssteuerungs-, MAC-, -Adresse des DHCP-Endgeräts umfasst;
ein erstes Sendemodul (420), ausgelegt zum Weiterleiten der durch das erste Empfangsmodul empfangenen DHCP-Anforderungsnachricht zu einem DHCP-Server und Einrichten von Bindungsinformation basierend auf der Identifizierungsinformation;
ein zweites Empfangsmodul (430), ausgelegt zum Empfangen einer durch den DHCP-Server gesendeten DHCP-Antwortnachricht, die eine dem DHCP-Endgerät zugewiesene IP-Adresse umfasst; und
ein zweites Sendemodul (440), ausgelegt zum Weiterleiten der von dem zweiten Empfangsmodul empfangenen DHCP-Antwortnachricht zu der ersten Einrichtung und Vervollständigen der Bindungsinformation basierend auf der dem DHCP-Endgerät zugewiesenen IP-Adresse.

12. Einrichtung nach Anspruch 11, wobei die erste Einrichtung eine optische Netzwerkeinheit, ONU, oder ein optisches Netzwerkendgerät, ONT, ist und sowohl die zweite Einrichtung als auch die Einrichtung optische Leitungsabschlüsse, OLTs, sind.

13. Einrichtung nach Anspruch 11 oder 12, wobei die Identifizierungsinformation des DHCP-Endgeräts ferner "Virtual Local Area Network"-, VLAN-, -Information des DHCP-Endgeräts umfasst.

14. Einrichtung nach einem der Ansprüche 11 bis 13, wobei die durch die Einrichtung eingerichtete Bindungsinformation eine DHCP-"Snooping"-Bindungstabelle, eine MAC-Bindungstabelle und eine IP-Bindungstabelle umfasst.

## Revendications

1. Procédé de communication pour un système de réseau optique, le système de réseau optique comprenant un groupe de protection, le groupe de protection comprenant un premier dispositif sur un côté terminal de protocole de configuration dynamique des hôtes, DHCP, et un deuxième dispositif et un troisième dispositif qui sont sur un côté serveur DHCP, un port principal du premier dispositif étant connecté au deuxième dispositif, et un port secondaire du premier dispositif étant connecté au troisième dispositif ; et le procédé comprenant :
l'obtention, par le premier dispositif, d'informations d'identification d'un terminal DHCP lors de la détection qu'un port actif du premier dispositif est commuté du port principal vers le port secondaire, les informations d'identification comprenant une adresse de contrôle d'accès au support, MAC, du terminal DHCP ;
la génération, par le premier dispositif en fonction des informations d'identification, d'un message de requête DHCP utilisé pour demander une adresse IP pour le terminal DHCP, le message de requête DHCP comprenant les informations d'identification ;
l'envoi, par le premier dispositif, du message de requête DHCP au troisième dispositif en utilisant le port secondaire, de sorte que le troisième dispositif transfère le message de requête DHCP vers un serveur DHCP ;
la réception, par le premier dispositif, d'un message de réponse DHCP envoyé par le troisième dispositif, le message de réponse DHCP étant reçu par le troisième dispositif en provenance du serveur DHCP, et le message de réponse DHCP comprenant une adresse IP attribuée par le serveur DHCP au terminal DHCP ; et
l'envoi, par le premier dispositif au terminal DHCP, de l'adresse IP attribuée par le serveur DHCP au terminal DHCP, de sorte que le terminal DHCP transmette un service au serveur DHCP en utilisant un trajet secondaire sur lequel est situé le troisième dispositif.

2. Procédé selon la revendication 1, dans lequel le premier dispositif est une unité de réseau optique, ONU, ou un terminal de réseau optique, ONT, et à la fois le deuxième dispositif et le troisième dispositif sont des terminaux de ligne optique, OLT.

3. Procédé selon la revendication 1 ou 2, dans lequel les informations d'identification du terminal DHCP comprennent en outre des informations de réseau local virtuel, VLAN, du terminal DHCP.

4. Procédé de communication pour un système de réseau optique, le système de réseau optique comprenant un groupe de protection, le groupe de protection comprenant un premier dispositif sur un côté terminal de protocole de configuration dynamique des hôtes, DHCP, et un deuxième dispositif et un troisième dispositif qui sont sur un côté serveur DHCP, un port principal du premier dispositif étant connecté au deuxième dispositif, et un port secondaire du premier dispositif étant connecté au troisième dispositif ; et le procédé comprenant :
la réception, par le troisième dispositif, d'un message de requête DHCP qui est envoyé par le premier dispositif et qui est utilisé pour demander une adresse IP pour le terminal DHCP, le message de requête DHCP étant généré par le premier dispositif en fonction des informations d'identification du terminal DHCP après que le groupe de protection a commuté, le message de requête DHCP comprenant les informations d'identification, et les informations d'identification comprenant une adresse de contrôle d'accès au support, MAC, du terminal DHCP ;
le transfert, par le troisième dispositif, du message de requête DHCP à un serveur DHCP, et la configuration d'informations de liaison sur la base des informations d'identification ;
la réception, par le troisième dispositif, d'un message de réponse DHCP qui est envoyé par le serveur DHCP et qui comprend l'adresse IP attribuée au terminal DHCP ; et le transfert, par le troisième dispositif, du message de réponse DHCP au premier dispositif, et le remplissage des informations de liaison sur la base de l'adresse IP attribuée au terminal DHCP.

5. Procédé selon la revendication 4, dans lequel le premier dispositif est une unité de réseau optique, ONU, ou un terminal de réseau optique, ONT, et à la fois le deuxième dispositif et le troisième dispositif sont des terminaux de ligne optique, OLT.

6. Procédé selon la revendication 4 ou 5, dans lequel les informations d'identification du terminal DHCP comprennent en outre des informations de réseau local virtuel, VLAN, du terminal DHCP.

7. Procédé selon l'une quelconque des revendications 4 à 6, dans lequel les informations de liaison configurées par le troisième dispositif comprennent une table de liaison d'espionnage DHCP, une table de liaison MAC et une table de liaison IP.

8. Dispositif pour un système de réseau optique, le système de réseau optique comprenant un groupe de protection, le groupe de protection comprenant le dispositif sur un côté terminal de protocole de configuration dynamique des hôtes, DHCP, et un deuxième dispositif et un troisième dispositif qui sont sur un côté serveur DHCP, un port principal du dispositif étant connecté au deuxième dispositif, et un port secondaire du dispositif étant connecté au troisième dispositif ; et le dispositif comprenant :
un module d'obtention (310), configuré pour obtenir des informations d'identification d'un terminal DHCP lors de la détection qu'un port actif du premier dispositif est commuté du port principal vers le port secondaire, les informations d'identification comprenant une adresse de contrôle d'accès au support, MAC, du terminal DHCP ;
un module de génération (320), configuré pour générer, en fonction des informations d'identification obtenues par le module d'obtention, un message de requête DHCP utilisé pour demander une adresse IP pour le terminal DHCP, le message de requête DHCP comprenant les informations d'identification ;
un premier module d'envoi (330), configuré pour envoyer, au troisième dispositif en utilisant le port secondaire, le message de requête DHCP généré par le module de génération, de sorte que le troisième dispositif transfère le message de requête DHCP à un serveur DHCP ;
un module de réception (340), configuré pour recevoir un message de réponse DHCP envoyé par le troisième dispositif, le message de réponse DHCP étant reçu par le troisième dispositif en provenance du serveur DHCP, et le message de réponse DHCP comprenant une adresse IP attribuée par le serveur DHCP au terminal DHCP ; et
un second module d'envoi (350), configuré pour envoyer, au terminal DHCP, l'adresse IP qui est reçue par le module de réception et qui est attribuée par le serveur DHCP au terminal DHCP, de sorte que le terminal DHCP transmette un service au serveur DHCP en utilisant un trajet secondaire sur lequel est situé le troisième dispositif.

9. Dispositif selon la revendication 8, le dispositif étant une unité de réseau optique ONU ou un terminal de réseau optique, ONT, et à la fois le deuxième dispositif et le troisième dispositif étant des terminaux de ligne optique, OLT.

10. Dispositif selon la revendication 8 ou 9, dans lequel les informations d'identification du terminal DHCP comprennent en outre des informations de réseau local virtuel, VLAN, du terminal DHCP.

11. Dispositif pour un système de réseau optique, le système de réseau optique comprenant un groupe de protection, le groupe de protection comprenant un premier dispositif sur un côté terminal de protocole de configuration dynamique des hôtes, DHCP, et un deuxième dispositif et le dispositif qui sont sur un côté serveur DHCP, un port principal du premier dispositif étant connecté au deuxième dispositif ; et un port secondaire du premier dispositif étant connecté au dispositif ; et le dispositif comprenant :
un premier module de réception (410), configuré pour recevoir un message de requête DHCP qui est envoyé par le premier dispositif et qui est utilisé pour demander une adresse IP pour le terminal DHCP, le message de requête DHCP étant généré par le premier dispositif en fonction d'informations d'identification du terminal DHCP après que le groupe de protection a commuté, le message de requête DHCP comprenant les informations d'identification, et les informations d'identification comprenant une adresse de contrôle d'accès au support, MAC, du terminal DHCP ;
un premier module d'envoi (420), configuré pour : transférer le message de requête DHCP reçu par le premier module de réception vers un serveur DHCP, et configurer des informations de liaison sur la base des informations d'identification ;
un second module de réception (430), configuré pour recevoir un message de réponse DHCP qui est envoyé par le serveur DHCP et qui comprend une adresse IP attribuée au terminal DHCP ; et
un second module d'envoi (440), configuré pour : transférer le message de réponse DHCP reçu par le second module de réception vers le premier dispositif, et remplir les informations de liaison sur la base de l'adresse IP attribuée au terminal DHCP.

12. Dispositif selon la revendication 11, dans lequel le premier dispositif est une unité de réseau optique, ONU, ou un terminal de réseau optique, ONT, et à la fois le deuxième dispositif et le dispositif sont des terminaux de ligne optique, OLT.

13. Dispositif selon la revendication 11 ou 12, dans lequel les informations d'identification du terminal DHCP comprennent en outre des informations de réseau local virtuel, VLAN, du terminal DHCP.

14. Dispositif selon l'une quelconque des revendications 11 à 13, dans lequel les informations de liaison configurées par le dispositif comprennent une table de liaison d'espionnage DHCP, une table de liaison MAC et une table de liaison IP.
